# EUROPEAN PATENT APPLICATION

(11) **EP 3 192 568 A1**
(43) Date of publication of application: **19.07.2017**
(21) Application number: 17150486.3
(22) Date of filing: 05.01.2017
(51) Int. Cl.: A62B 35/00, G06Q 10/06

(54) **FALL PROTECTION HARNESS WITH LOCATION AND INVENTOR INDICATOR**

(30) Priority: 18.01.2016 US 201614997747
(71) Applicant: Honeywell International Inc., Morris Plains, NJ 07950 (US)
(72) Inventor: HUSETH, Steve D., Morris Plains, NJ New Jersey 07950 (US); PHAM, Hai D., Morris Plains, NJ New Jersey 07950 (US); SEMAN, Michael, Morris Plains, NJ New Jersey 07950 (US)
(74) Representative: Houghton, Mark Phillip

(57) **Abstract**

A fall protection harness includes a computer board with a communication device. A computer processor is communicatively coupled to the computer board. The computer board includes unique identification data associated with the fall protection harness and a person. The computer board transmits periodic signals that include data relating to a physical condition of the fall protection harness and the unique identification data. The computer processor receives the periodic signals, and determines a location of the person at a particular time based on the periodic signals.

## Description

### Technical Field

The present disclosure relates to fall protection harnesses, and in an embodiment, but not by way of limitation, a fall protection harness with a location and inventory indicator.

### Background

Fall protection harnesses are critical pieces of safety equipment that are integral to preventing accidents on a job site. Fall protection harnesses provide a reliable restraint system worn by a worker that is connected to a fixed anchor point on a supporting structure, such as a building under construction. Fall protection harnesses are designed to arrest a fall of a worker quickly and safely.

### Brief Description of the Drawings

**FIG. 1** illustrates a fall protection harness that includes a location and inventory system.
**FIGS. 2A - 2B** illustrate features of a location and inventory indicator for a fall protection harness.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, electrical, and optical changes may be made without departing from the scope of the present invention. The following description of example embodiments is, therefore, not to be taken in a limited sense, and the scope of the present invention is defined by the appended claims.

Supervisors managing large construction and industrial jobs manage a large number of workers often across multiple sites. During the course of a single day or multiple days, the supervisor may interact with a large number of persons at multiple times and at multiple sites. Having an accurate record of the time at which and the location of workers with whom the supervisor talked, as well as other employees in the same vicinity, would provide the supervisor with enhanced worker accountability, an ability to rapidly contact a specific worker based on where that worker was last located, and an accounting of other workers who were nearby the person and that also need to be contacted.

As noted above, workers working at heights wear fall protection equipment, and in particular, a fall protection harness. In an embodiment, the fall protection harness is integrated with an electronic radio frequency (RF) device that is designed to uniquely identify, within a short range, the worker who is wearing the fall protection harness. Consequently, a supervisor who comes onto the site or into the vicinity of the worker will receive RF beacon signals from all the fall protection harnesses that are being worn by the workers in the vicinity. These RF beacon signals contain the unique identifier of each fall protection harness and/or worker. These RF beacon signals can be received by the supervisor's smart phone or other personal communication device. Both the RF signal beacons and the supervisor's smart phone contain the current time and the current location of the workers and/or supervisor. The combination of the workers' identifying signals with the time and location of the supervisor's smart phone provides a log of each person contacted in the vicinity along with the date and time of the contact. This information can be displayed to the supervisor on the smart phone display and/or relayed to a central server site (such as on a cloud).

In an embodiment, a fall protection harness is fitted with a small electronics module that provides features such as a fall alarm, a condition status of the fall protection harness, and an automated fall protection harness inventory tracking. The module provides a periodic RF heart beat message indicating the device is working properly. This heart beat message can be picked up by nearby smart phones or other personal communication devices and used to identify workers who are using the fall protection harnesses. Workers may be assigned a specific harness with the RF device or the harness RF device might interrogate the worker's own smart phone for specific worker identifying information that will be used in the periodic heart beat message. The supervisor carries a smart phone or other personal communication device with software designed to securely receive the identifying heart beat message information from each fall protection harness RF device and create a log database of the persons in the vicinity along with the time and location. The software also provides an intuitive user display of the worker log collected.

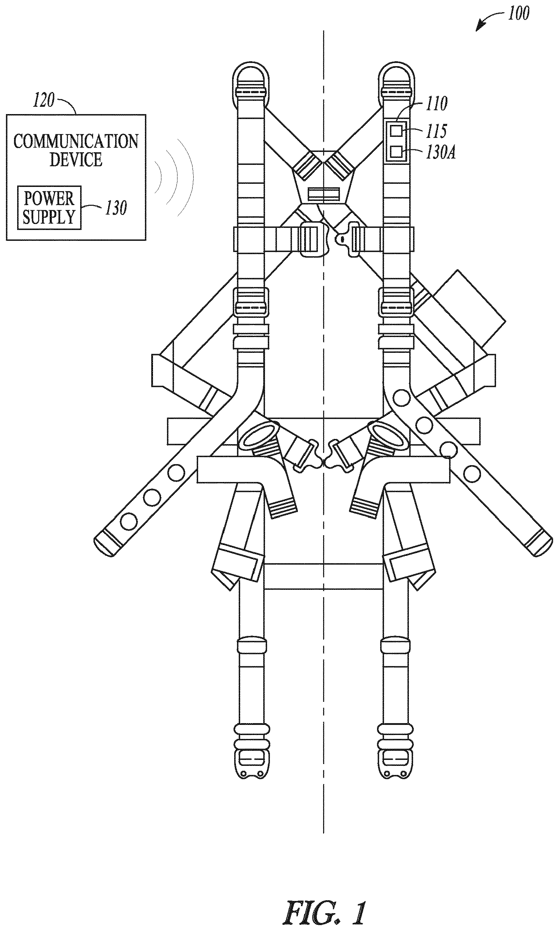

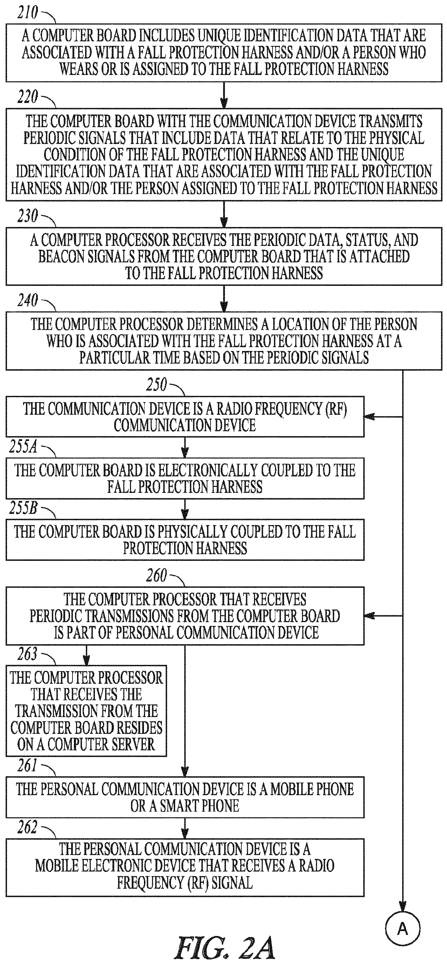

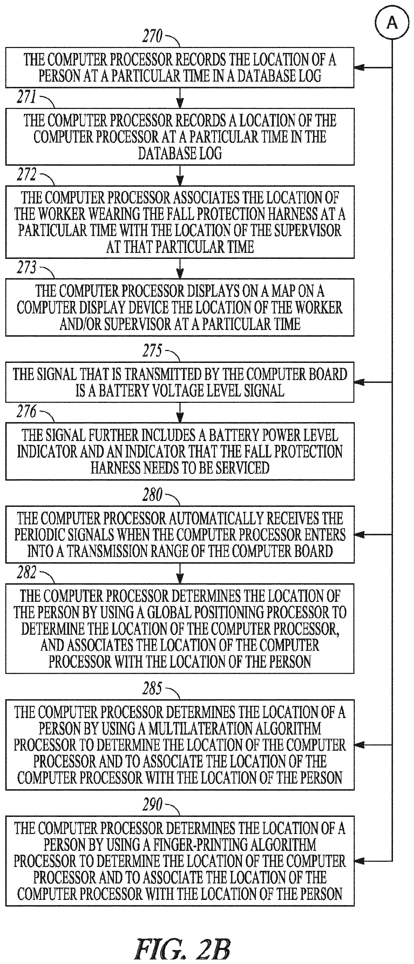

**FIGS. 1** and **2A - 2B** illustrate a system that includes a fall protection harness and a location and inventory system. In particular, **FIGS. 2A - 2B** are a block diagram illustrating operations and features of a fall protection harness system that includes location and inventory functions. **FIGS. 2A - 2B** include a number of blocks **210 - 290.** Though arranged substantially serially in the example of **FIGS. 2A - 2B****,** other examples may reorder the blocks, omit one or more blocks, and/or execute two or more blocks in parallel using multiple processors or a single processor organized as two or more virtual machines or sub-processors. Moreover, still other examples can implement the blocks as one or more specific interconnected hardware or integrated circuit modules with related control and data signals communicated between and through the modules. Thus, any process flow is applicable to software, firmware, hardware, and hybrid implementations.

**FIG. 1** illustrates a fall protection harness **100.** The fall protection harness **100** has attached to it a computer board **110.** The computer board **110** includes a communication device **115.** A computer processor **120** is communicatively coupled to the computer board **110.** A power supply **130A,** such as a battery, is connected to the computer board **110** and the communication device **115,** and a power supply **130** is connected to the computer processor **120.**

Referring to **FIGS. 2A - 2B****,** block **210** illustrates that the computer board includes unique identification data that are associated with the fall protection harness and/or a person who wears or is assigned to the fall protection harness. At **220,** the computer board with the communication device transmits periodic signals. These periodic signals include data that relate to the physical condition of the fall protection harness and the unique identification data that are associated with the fall protection harness and/or the person assigned to the fall protection harness. At **230,** the computer processor receives these periodic signals that include periodic data, status, and beacon signals from the computer board that is attached to the fall protection harness. At **240,** the computer processor determines a location of the person who is associated with the fall protection harness at a particular time based on the periodic signals.

The estimation of the end of life of a fall protection harness, the determination of damage to a fall protection harness, and/or detecting a fall by a person wearing a fall protection harness can be implemented using data from a body area network associated with a fall protection harness as disclosed in U.S. Application No. 14/956,816 which is incorporated herein by reference, a magnetic sensor associated with the fall protection harness as disclosed in U.S. Serial Application No. 14/962,671 which is incorporated herein by reference, an optical sensor associated with the fall protection harness as disclosed in U.S. Serial Application No. 14/962,833 which is incorporated herein by reference, and/or other means as is known to those of skill in the art.

As indicated at **250,** the communication device is a radio frequency (RF) communication device. Block **255A** illustrates that the computer board including the communication device is electronically coupled to the fall protection harness. That is, the computer board including the communication device can be a standalone device that communicates with a processor on the fall protection harness. For example, the computer board including the communication device can be a smart phone that is carried by the worker using the fall protection harness. Block **255B** illustrates that the computer board including the communication device is physically coupled to the fall protection harness and therefore is part and parcel of the fall protection harness. Such physical connection can be via sewing, clamping, gluing, or any other connection and/or coupling means known to those of skill in the art.

Block **260** illustrates that the computer processor that receives periodic transmissions from the computer board is part of personal communication device, such as a mobile phone and/or smart phone **(261).** The personal communication device can be carried by a person, such as a supervisor of several construction workers. In an embodiment, the computer processor communicates with a server that contains a database, wherein the computer processor can look up the unique identification of the person that is associated with the fall protection harness. The server and database could be part of a cloud. As illustrated at **262,** the personal communication device is a mobile electronic device that receives a radio frequency (RF) signal. The RF signal can be used to generate an alarm regarding an unsafe condition of the fall protection harness. This RF signal can further be used to initiate an electronic message and/or relay an electronic message. Once again, the electronic message can be related to a condition of the fall protection harness, an indication of a fall by a person wearing the fall protection harness, and/or as explained in more detail herein, the logging of locations of a person wearing the fall protection harness. As illustrated at **263,** the computer processor that receives the transmission from the computer board resides on a computer server.

Beginning at **270,** details of the location and inventory features of the system are disclosed. Specifically, at **270,** the computer processor records the location of a person at a particular time in a database log. As previously noted, this location database log can be either resident locally on a supervisor's smart phone, or remotely at a server on a cloud. At **271,** the computer processor records a location of the computer processor at a particular time in the database log. This embodiment is particularly suited to the situation wherein the supervisor has his or her own smart phone that includes the computer processor. In such embodiments, as indicated at **272,** the computer processor associates the location of the worker wearing the fall protection harness at a particular time with the location of the supervisor at that particular time. In this manner, a log can be kept of the locations of the worker throughout the day, the locations of the supervisor throughout the day, and the workers with whom the supervisor interacted throughout the day. Block **273** illustrates that the computer processor displays on a map on a computer display device the location of the worker and/or supervisor at a particular time.

Block **275** indicates that the signal that is transmitted by the computer board is a battery voltage level signal. A battery voltage level signal is typically in the range of about 1-12 volts. Block **276** indicates that the signal further includes a battery power level indicator (to warn of low battery power levels) and an indicator that the fall protection harness needs to be serviced (as determined through the age of the harness or detected damage to the harness).

Block **280** discloses that the computer processor automatically receives the periodic signals when the computer processor enters into a transmission range of the computer board. For example, when a supervisor of construction workers enters a construction site, that supervisor's smart phone can start receiving periodic signals that are transmitted by the computer boards associated with all of the fall protection harnesses in use at the construction site. Then, in an embodiment, at **282,** the computer processor (*e.g*., smart phone) determines the location of the person such as a construction worker by using a global positioning processor to determine the location of the computer processor, and associates the location of the computer processor with the location of the person. In this manner, the system can determine not only where and when workers and supervisors are located, but the interactions among the supervisors and workers throughout a day.

At **285,** the computer processor determines the location of a worker, supervisor, or other person by using a multi-lateration algorithm processor to determine the location of the computer processor, and to associate the location of the computer processor with the location of the person. As is known to those of skill in the art, a multilateration algorithm refers to a navigation technique that is based on the measurement of the difference in distance to two stations at known locations that broadcast signals at known times. At **290,** the computer processor determines the location of a worker, supervisor, or other person by using a finger-printing algorithm processor to determine the location of the computer processor, and to associate the location of the computer processor with the location of the person. As is known to those of skill in the art, a finger-printing algorithm is a procedure that maps an arbitrarily large data item to a much shorter bit string, which serves as its fingerprint, and that uniquely identifies the original data for all practical purposes just as human fingerprints uniquely identify people for all practical purposes.

It should be understood that there exist implementations of other variations and modifications of the invention and its various aspects, as may be readily apparent, for example, to those of ordinary skill in the art, and that the invention is not limited by specific embodiments described herein. Features and embodiments described above may be combined with each other in different combinations. It is therefore contemplated to cover any and all modifications, variations, combinations or equivalents that fall within the scope of the present invention.

The Abstract is provided to comply with 37 C.F.R. § 1.72(b) and will allow the reader to quickly ascertain the nature and gist of the technical disclosure. It is submitted with the understanding that it will not be used to interpret or limit the scope or meaning of the claims.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus the following claims are hereby incorporated into the Description of the Embodiments, with each claim standing on its own as a separate example embodiment.

## Claims

1. A system comprising:
a fall protection harness; (100)
a computer board (110) comprising a communication device (115) coupled to the fall protection harness; and
a computer processor (120) communicatively coupled to the computer board;
wherein the computer board comprises unique identification data associated with one or more of the fall protection harness and a person; (210)
wherein the computer board is operable to transmit periodic signals comprising data relating to the physical condition of the fall protection harness and the unique identification data; (220)
wherein the computer processor is operable to receive the periodic signals; (230) and
wherein the computer processor is operable to determine a location of the person at a particular time based on the periodic signals. (240)

2. The system of claim 1, wherein the computer board comprising the communication device is electronically coupled to the fall protection harness. (255A)

3. The system of claim 1, wherein the computer board comprising the communication device is physically coupled to the fall protection harness. (255B)

4. The system of claim 1, wherein the computer processor resides on a personal communication device; and wherein the personal communication device comprises a mobile phone. (260, 261)

5. The system of claim 1, wherein the computer processor is operable to record the location of the person at the particular time in a database log; and wherein the computer processor is operable to record a location of the computer processor at the particular time in the database log. (270, 271)

6. The system of claim 5, wherein the computer processor is associated with a second person, and wherein the computer processor is operable to associate the location of the person at the particular time with the location of the second person at the particular time. (272)

7. The system of claim 5, wherein the computer processor is operable to display on a map on a computer display device the location of the person at the particular time or the location of the second person at the particular time. (273)

8. The system of claim 1, wherein the computer board is operable to receive the unique identification data from a personal communication device associated with the person. (260)

9. The system of claim 1, wherein the computer processor is operable to automatically receive the periodic signals when the computer processor enters into a transmission range of the computer board. (280)

10. The system of claim 1, wherein the computer processor is operable to determine the location of the person by using a multi-lateration algorithm processor to determine the location of the computer processor, and to associate the location of the computer processor with the location of the person; and wherein the computer processor is operable to determine the location of the person by using a finger-printing algorithm processor to determine the location of the computer processor, and to associate the location of the computer processor with the location of the person. (285, 290)
